# EUROPEAN PATENT APPLICATION

(11) **EP 4 607 067 A1**
(43) Date of publication of application: **27.08.2025**
(21) Application number: 23879583.5
(22) Date of filing: 02.10.2023
(51) Int. Cl.: F16J 15/34

(54) **FLOATING SEAL DEVICE**

(30) Priority: 17.10.2022 JP 2022166430
(71) Applicant: Eagle Industry Co., Ltd., Minato-ku Tokyo 105-8587 (JP)
(72) Inventor: FUJIWARA, Yasushi, Tokyo 105-8587 (JP)
(74) Representative: Seifert, Ruth
(86) International application number: PCT/JP2023/035873
(87) International publication number: WO 2024/084936

(57) **Abstract**

Provided is a floating seal device capable of supplying a lubricating oil between sliding surfaces.

A rotating side seal ring 6 has an inner peripheral surface 62 provided with a recessed portion 64 extending toward an end 62A on the side of a sliding surface 60 in an opposite direction to a direction of rotation of the rotating side seal ring 6.

## Description

### {TECHNICAL FIELD}

The present invention relates to a floating seal device, for example, a floating seal device for shaft sealing.

### {BACKGROUND ART}

Conventionally, a floating seal device is known which seals between a stationary side structure and a rotating side structure for connecting the rotating side structure to be rotatable relative to the stationary side structure as in a travel motor, a roller, an idler, and an axle. In such a floating seal device, a pair of seal rings is slid relative to each other to seal the sealed fluid, and an elastic ring is generally used as a secondary seal, thereby providing a floating function that allows the pair of seal rings to tilt relative to each other.

An example of the floating seal device is described in Patent Citation 1, which includes a housing as a stationary side structure, a rotor as a rotating side structure, a stationary ring arranged radially inward of the housing, a rotating ring arranged radially inward of the rotor, an O-ring held between the housing and the stationary ring in a sealed state, and an O-ring held between the rotor and the rotating ring in a sealed state. The inner peripheral surface of the housing and the inner peripheral surface of the rotor are inclined so as to reduce in diameter in the direction away from each other. The outer peripheral surface of the stationary ring is generally parallel to the inner peripheral surface of the housing and is inclined with respect to the shaft, and the outer peripheral surface of the rotating ring is generally parallel to the inner peripheral surface of the rotor and is inclined with respect to the shaft.

The two O-rings are elastically deformed, and their elastic restoring forces act in the direction in which the sliding surface of the stationary ring and the sliding surface of the rotating ring are brought closer together. Accordingly, the sliding surface of the stationary ring and the sliding surface of the rotating ring function as a primary seal, and the O-rings function as a secondary seal. Thus, foreign matter such as soil and mud is prevented from entering the equipment interior from the equipment exterior. In addition, lubricating oil is contained in the interior of the floating seal device, improving the sliding property between the sliding surface of the stationary ring and the sliding surface of the rotating ring.

### {CITATION LIST}

### {Patent Literature}

Patent Citation 1: JP 60-18869 B (Page 1, FIG. 1)

### {SUMMARY OF INVENTION}

### {Technical Problem}

However, construction machinery and the like provided with a floating seal device such as that described in Patent Citation 1 is often operated on inclined or uneven ground, and when the floating seal device is tilted, the lubricating oil tends to shift toward the inclined side, and the lubricating oil cannot be sufficiently supplied to a portion exposed above the oil surface of the lubricating oil, which may result in a decrease in lubrication. In addition, when the rotating ring rotates at high speed, the lubricating oil may not be sufficiently supplied to the portion exposed above the oil surface of the lubricating oil.

The present invention has been made in view of such problems, and an object thereof is to provide a floating seal device capable of supplying lubricating oil between sliding surfaces.

### {Solution to Problem}

In order to solve the problems described above, a floating seal device according to the present invention, includes: a stationary side housing; a rotating side housing rotatable relative to the stationary side housing; a stationary side seal ring arranged on an inner periphery side of the stationary side housing; a rotating side seal ring arranged on the inner periphery side of the rotating side housing and sliding opposite the stationary side seal ring; a stationary side elastic sealing member interposed between the stationary side housing and the stationary side seal ring; and a rotating side elastic sealing member interposed between the rotating side housing and the rotating side seal ring, wherein fluid is contained on an inner periphery side of the stationary side seal ring and the rotating side seal ring, and the rotating side seal ring has an inner peripheral surface provided with at least one recessed portion extending in an opposite direction to a direction of rotation of the rotating side seal ring toward a sliding surface side end. According to the aforesaid feature of the present invention, as the rotating side seal ring rotates, the fluid contained in the interior of the floating seal device is guided between the sliding surfaces by the recessed portion, allowing the fluid to be supplied between the sliding surfaces.

It may be preferable that the recessed portion is a spiral groove. According to this preferable configuration, the spiral groove allows the fluid to be smoothly supplied between the sliding surfaces.

It may be preferable that the spiral groove has have a width narrower than a land adjacent to the spiral groove. According to this preferable configuration, the fluid is likely to be retained in the spiral groove, so that the fluid can be reliably supplied between the sliding surfaces.

It may be preferable that the recessed portion is open to the sliding surface side end of the inner peripheral surface of the rotating side seal ring. According to this preferable configuration, the fluid is likely to be guided to the sliding surfaces.

It may be preferable that the recessed portion is formed over the entire inner peripheral surface of the rotating side seal ring. According to this preferable configuration, the recessed portion extends over a long range in an axial direction, allowing a larger amount of fluid to be supplied between the sliding surfaces.

It may be preferable that the recessed portion has a bottom surface which is at the sliding surface side end of the rotating side seal ring, and which is inclined toward an outer diameter side. According to this preferable configuration, the fluid can be smoothly supplied to the sliding surface on the outer diameter side.

It may be preferable that the rotating side seal ring has a sliding surface disposed radially outward of the inner peripheral surface of the rotating side seal ring and a tapered surface formed between the sliding surface and the inner peripheral surface, and the recessed portion is provided across the inner peripheral surface and the tapered surface. According to this preferable configuration, the fluid is guided from the inner peripheral surface along the tapered surface to the outer diameter side, allowing the fluid to be more reliably supplied between the sliding surfaces by centrifugal force.

It may be preferable that a plurality of the recessed portions are provided. According to this preferable configuration, the recessed portions are dispersed in the circumferential direction of the inner peripheral surface of the rotating side seal ring, allowing the fluid to be supplied evenly in the circumferential direction of the sliding surface.

It may be preferable that the rotating side seal ring has a reverse recessed portion extending opposite in direction to the recessed portion extending in one circumferential direction. According to this preferable configuration, the fluid can be supplied between the sliding surfaces regardless of the direction of rotation of the rotating side seal ring.

### {BRIEF DESCRIPTION OF DRAWINGS}

**FIG.** 1 is a cross-sectional view illustrating a floating seal device according to a first embodiment of the present invention.
**FIG.** 2 is a view of a sliding surface of a rotating side seal ring as viewed from an axial direction in the first embodiment.
**FIG.** 3 is a cross-sectional view of the rotating side seal ring in the first embodiment.
**FIG.** 4 is a schematic diagram illustrating a developed cross section taken along a spiral groove in the first embodiment.
FIG. 5 is a schematic cross-sectional view illustrating the movement of lubricating oil as the rotating side seal ring rotates in the first embodiment.
FIG. 6 is a view illustrating the movement of lubricating oil as the rotating side seal ring rotates as viewed from the axial direction in the first embodiment.
FIG. 7A is a cross-sectional view of a rotating side seal ring according to a second embodiment of the present invention, and FIG. 7B is a schematic diagram illustrating a developed cross section taken along a spiral groove according to the second embodiment.
FIG. 8 is a cross-sectional view of a rotating side seal ring according to a third embodiment of the present invention.

### {DESCRIPTION OF EMBODIMENTS}

Modes for carrying out a floating seal device according to the present invention will be described below on the basis of the embodiments.

### {First embodiment}

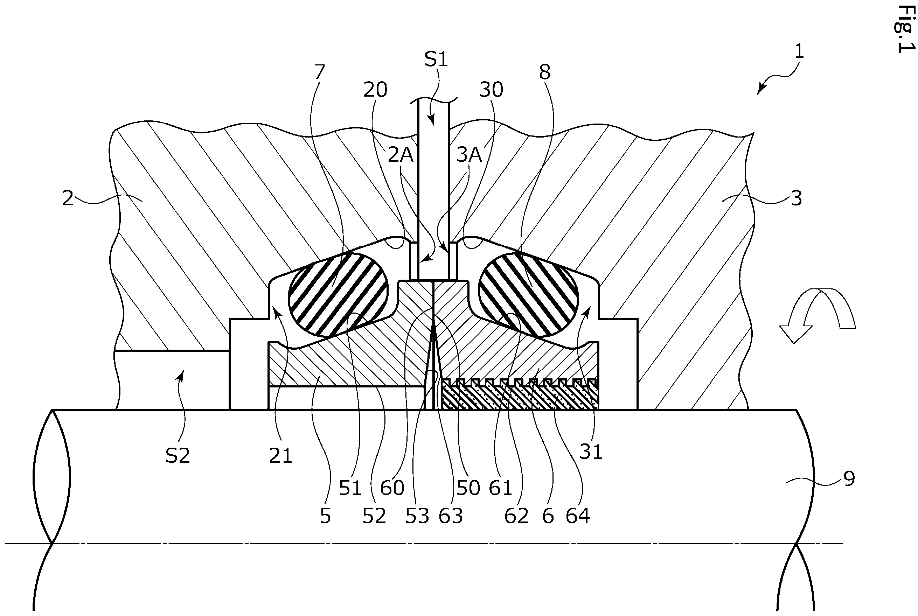

A floating seal device according to a first embodiment of the present invention will be described with reference to FIG. 1 to FIG. 6. For convenience of explanation, grooves and the like formed on a sliding surface may be indicated by dots in the drawings.

A floating seal device 1 according to the first embodiment has a track roller 3 serving as a rotating side housing that is connected to be rotatable relative to a rotating shaft 9 (see FIG. 1) extending from a side frame that supports a crawler, and is used to prevent foreign matter such as soil and mud from entering the side of the rotating shaft 9 through a gap between a stationary side housing 2 and the track roller 3.

As illustrated in FIG. 1, the floating seal device 1 mainly includes the stationary side housing 2, the track roller 3, a stationary side seal ring 5, a rotating side seal ring 6, a stationary side O-ring 7 as a stationary side elastic sealing member, and a rotating side O-ring 8 as a rotating side elastic sealing member.

The stationary side housing 2 is fixed to the side frame. The track roller 3 is connected to the rotating shaft 9 with the rotating shaft 9 extending therethrough. The stationary side seal ring 5 is disposed radially inward of the stationary side housing 2. The rotating side seal ring 6 is disposed radially inward of the track roller 3. The stationary side O-ring 7 is interposed between the stationary side housing 2 and the stationary side seal ring 5. The rotating side O-ring 8 is interposed between the track roller 3 and the rotating side seal ring 6.

The track roller 3 is arranged apart from the stationary side housing 2 in an axial direction, and is rotatable relative to the stationary side housing 2.

The seal rings 5, 6 and the O-rings 7, 8 define an equipment exterior side space S1 including the gap between the stationary side housing 2 and the track roller 3, and an equipment interior side space S2 on side of the rotating shaft 9, and seal the boundary between them. The stationary side housing 2, the track roller 3, the seal rings 5, 6, and the O-rings 7, 8 will be described in detail below.

First, the stationary side housing 2 is described. With reference to FIG. 1, the stationary side housing 2 is formed in a stepped cylindrical shape, through which the rotating shaft 9 can extend loosely. The stationary side housing 2 has an inner peripheral portion 2A formed on side of the track roller 3 and on an inner diameter side, and the inner peripheral portion 2A is open on the side of the track roller 3 and is recessed in the axial direction.

The inner peripheral portion 2A has a seal surface 20 which decreases in diameter toward the inner diameter side as it is away from the opposing track roller 3 in the axial direction. The inner peripheral portion 2A also has an annular wall 21 formed opposite the opening on the side of the track roller 3, and the wall 21 extends in a radial direction and is continuous in a circumferential direction. When the stationary side O-ring 7 moves in the axial direction away from the rotating side seal ring 6, the wall 21 is brought into contact with the stationary side O-ring 7 to restrict the axial movement.

Next, the track roller 3 is described. With reference to FIG. 1, the track roller 3 is formed in a stepped cylindrical shape and can be fitted onto the rotating shaft 9. The track roller 3 has an inner peripheral portion 3A formed on the side of the stationary side housing 2 and on the inner diameter side, and the inner peripheral portion 3A is open on the side of the stationary side housing 2 and is recessed in the axial direction.

The inner peripheral portion 3A has a seal surface 30 which decreases in diameter toward the inner diameter side as it is away from the side of the opposing stationary side housing 2 in the axial direction. The inner peripheral portion 3A also has an annular wall 31 formed opposite the opening on the side of the stationary side housing 2, and the wall 31 extends in a radial direction and is continuous in the circumferential direction. When the rotating side O-ring 8 moves in the axial direction away from the stationary side seal ring 5, the wall 31 is brought into contact with the rotating side O-ring 8 to restrict the axial movement.

Next, the stationary side seal ring 5 is described. The stationary side seal ring 5 is made of cast iron, and is formed in a stepped cylindrical shape, through which the rotating shaft 9 can extend loosely.

The stationary side seal ring 5 has an annular sliding surface 50 at the end opposite the rotating side seal ring 6.

The stationary side seal ring 5 has an inner peripheral surface 52 extending generally parallel to the rotating shaft 9. The inner peripheral surface 52 is disposed radially inward of the sliding surface 50 and axially farther away from the rotating side seal ring 6 than the sliding surface 50.

Between the sliding surface 50 and the inner peripheral surface 52, a tapered surface 53 that is continuous with them is formed. That is, the tapered surface 53 extends from the inner peripheral surface 52 toward the rotating side seal ring 6 while being inclined toward an outer diameter side.

The stationary side seal ring 5 is provided with an annular inclined groove recessed toward the inner diameter side at the center in the axial direction on the outer diameter side. The bottom surface of the inclined groove is a tapered surface 51 which decreases in diameter as it is away from the sliding surface 50.

In addition, the stationary side seal ring 5 is preferably made of a material such as Cr-Mo cast iron and Ni-Cr cast iron, but it may also be made of copper alloys, carbon steel, SiC, cemented carbide, ceramics, and the like.

Next, the rotating side seal ring 6 is described. The rotating side seal ring 6 is made of cast iron, and is formed in a stepped cylindrical shape, through which the rotating shaft 9 can extend loosely.

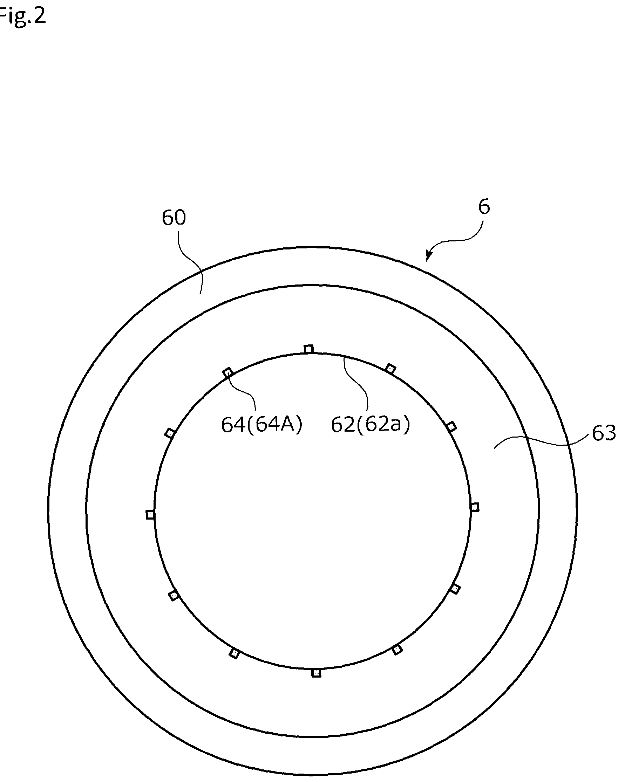

As illustrated in FIG. 1 and FIG. 2, the rotating side seal ring 6 has an annular sliding surface 60 at the end opposite the stationary side seal ring 5.

The rotating side seal ring 6 has an inner peripheral surface 62 extending generally parallel to the rotating shaft 9. The inner peripheral surface 62 is disposed radially inward of the sliding surface 60 and axially farther away from the stationary side seal ring 5 than the sliding surface 60.

Between the sliding surface 60 and the inner peripheral surface 62, a tapered surface 63 is formed as a sliding surface side end surface that is continuous with them. That is, the tapered surface 63 extends from the inner peripheral surface 62 toward the stationary side seal ring 5 while being inclined toward the outer diameter side. The inner peripheral surface 62 of the rotating side seal ring 6 is provided with spiral grooves 64 described in detail later.

The rotating side seal ring 6 has an annular inclined groove recessed toward the inner diameter side at the center in the axial direction on the outer diameter side. The bottom surface of the inclined groove is a tapered surface 61 which decreases in diameter as it is away from the sliding surface 60.

In addition, the rotating side seal ring 6 is preferably made of a material such as Cr-Mo cast iron and Ni-Cr cast iron, but it may also be made of copper alloys, carbon steel, SiC, cemented carbide, ceramics, and the like.

Next, the stationary side O-ring 7 and the rotating side O-ring 8 are described. Returning to FIG. 1, the stationary side O-ring 7 and the rotating side O-ring 8 are made of a rubber material and are formed in an annular shape, which can be fitted onto the inclined grooves of the stationary side seal ring 5 and the rotating side seal ring 6.

The stationary side O-ring 7 and the rotating side O-ring 8 are interposed in a compressed state between the stationary side housing 2 and the stationary side seal ring 5, and between the track roller 3 and the rotating side seal ring 6. The elastic restoring forces of the stationary side O-ring 7 and the rotating side O-ring 8 act in the direction in which the stationary side seal ring 5 and the rotating side seal ring 6 are brought closer to each other.

Accordingly, a predetermined sliding surface pressure is applied between the sliding surfaces 50, 60 in the axial direction, and the sliding surfaces 50, 60 function as primary seals.

In addition, the stationary side O-ring 7 in close contact between the stationary side housing 2 and the stationary side seal ring 5, and the rotating side O-ring 8 in close contact between the track roller 3 and the rotating side seal ring 6 function as secondary seals.

Accordingly, foreign matter such as soil and mud can be reliably prevented from entering the equipment interior side space S2, which contains lubricating oil as fluid, from the equipment exterior side space S1. The fluid may be other than lubricating oil.

The stationary side O-ring 7 and the rotating side O-ring 8 are preferably made of a material such as hydrogenated nitrile rubber (H-NBR), perfluoroelastomer, nitrile rubber (NBR) with a hardness of DuroA60 to 70, urethane rubber (U), fluororubber (FKM), butyl rubber (IIR), and a resin having elasticity.

Next, the spiral grooves 64 of the rotating side seal ring 6 are described with reference to FIGS. 2 to 4.

As illustrated in FIGS. 2 to 4, the inner peripheral surface 62 of the rotating side seal ring 6 has a plurality of (12 in this embodiment) spiral grooves 64 as recessed portions which are equiangularly arranged and have different phases in the circumferential direction.

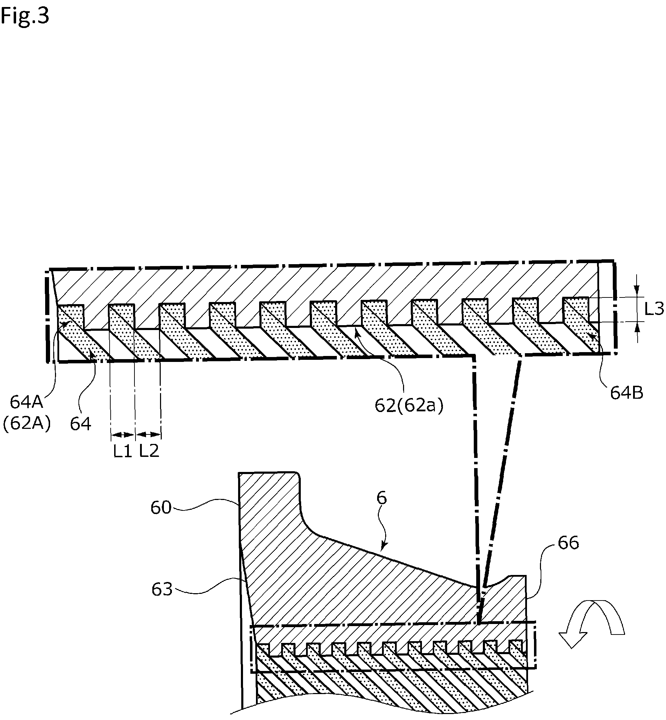

The spiral grooves 64 are recessed grooves each having a generally rectangular cross section and being open in a radially inward direction, and are formed to extend inwardly in the inner peripheral surface 62 by laser processing or the like. That is, as illustrated in FIG. 3, a land 62a of the inner peripheral surface 62 other than the spiral grooves 64 is formed into a protruded shape having a generally rectangular cross section.

The spiral grooves 64 extend spirally toward the sliding surface 60, specifically, toward a sliding surface side end 62A of the inner peripheral surface 62, in the direction opposite to the forward rotation direction of the rotating side seal ring 6.

Specifically, the rotating side seal ring 6 rotates clockwise when viewed in the axial direction from the right side of FIG. 3, i.e., from the side opposite the sliding surface 60 (see the arrows in FIGS. 1, 3). On the other hand, the spiral grooves 64 extend spirally toward the left side of FIG. 3, i.e., the side of the sliding surface 60 in the axial direction, while being wound counterclockwise when viewed in the axial direction from the right side of FIG. 3.

The spiral grooves 64 are formed on the inner peripheral surface 62 of the rotating side seal ring 6 so as to be wound one or more times in the circumferential direction.

In this embodiment, the spiral grooves 64 extend so as to be inclined at approximately 45 degrees with respect to the axial direction of the rotating shaft 9. As a result of experiments, it was found that the spiral grooves 64 are preferably inclined at 30 degrees to 60 degrees with respect to the axial direction of the rotating shaft 9, and particularly preferably, the spiral grooves 64 are inclined at approximately 45 degrees with respect to the axial direction of the rotating shaft 9.

An end 64A of the spiral grooves 64 on the side of the sliding surface 60 is open from an inner diameter end of the tapered surface 63 to the side of the stationary side seal ring 5 (i.e., the left side in FIG. 3). In addition, an end 64B of the spiral grooves 64 on the side opposite to the sliding surface 60 is open from an inner diameter end of an end surface 66 on the side opposite to the sliding surface 60 to the side opposite to the stationary side seal ring 5.

In other words, the spiral grooves 64 are formed over the entire inner peripheral surface 62 of the rotating side seal ring 6.

Additionally, the spiral grooves 64 each have a width dimension L1 that is slightly smaller than a width dimension L2 of the land 62a (L1<L2). The width dimension L2 of the land 62a is equal to or larger than the width dimension L1 of the spiral grooves 64, reducing the amount of lubricating oil that passes over the land 62a and flows downstream, and the lubricating oil is reliably guided to the side of the sliding surface 60. In addition, the width dimension L1 of the spiral grooves 64 is preferably 1 mm to 2 mm. When the width is smaller than this, the lubricating oil is unlikely to enter the spiral grooves 64, and on the other hand, when the width is larger than this, the lubricating oil is likely to overflow from the spiral grooves 64. The spiral grooves 64 are preferably deeper and greater in number as their increased volume results in greater centrifugal force.

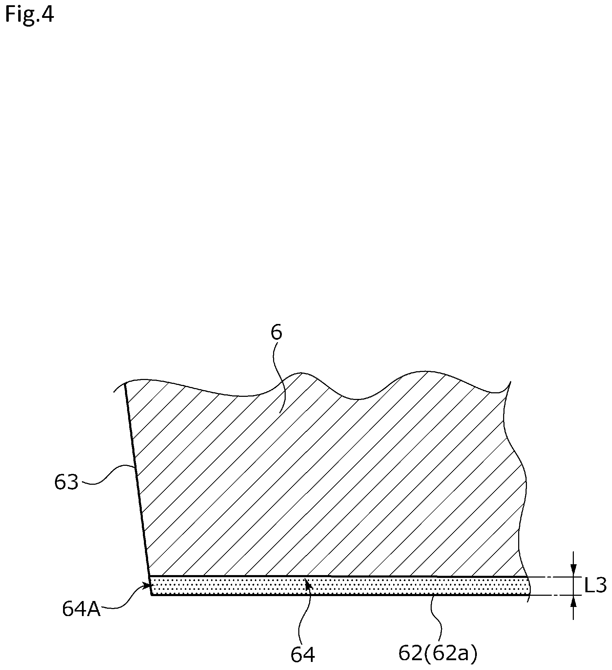

As illustrated particularly in FIG. 4, the spiral grooves 64 each have a depth dimension L3 substantially constant in the direction in which the spiral grooves 64 extend. Accordingly, the lubricating oil is smoothly guided to the side of the sliding surface 60. FIG. 4 illustrates a developed cross section taken along the spiral grooves.

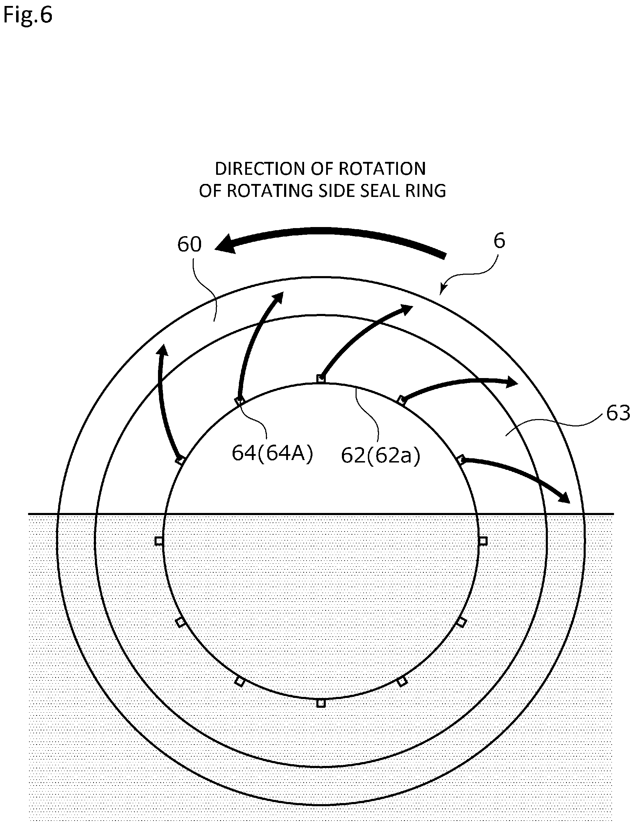

In such a floating seal device 1, upper portions of the sliding surface 50 of the stationary side seal ring 5 and the sliding surface 60 of the rotating side seal ring 6 are exposed above the oil level of the lubricating oil in the equipment interior side space S2 (see FIG. 6).

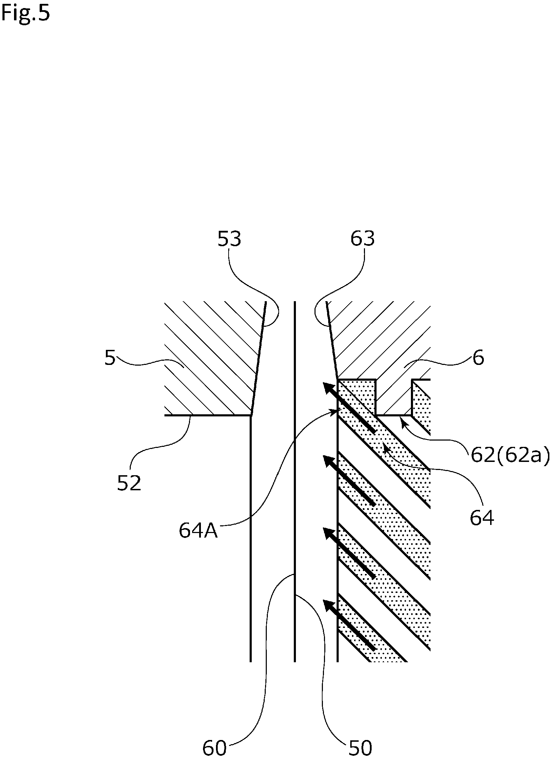

As illustrated in FIGS. 5 and 6, when the rotating side seal ring 6 rotates, the lubricating oil in the equipment interior side space S2 is subjected to centrifugal force and is guided from the spiral grooves 64 to the side of the sliding surface 60. Specifically, the lubricating oil is lifted up by the spiral grooves 64 and is supplied from the end 64A of the spiral grooves 64 toward the portions exposed above the oil level of the lubricating oil between the sliding surfaces 50, 60 (see the arrows in FIGS. 5 and 6). The lubricating oil discharged from the end 64A of the spiral grooves 64 to the tapered surface 63 flows toward the outer diameter side in the extension direction of the spiral grooves 64, i.e., in the direction opposite to the forward rotation direction of the rotating side seal ring 6, and reaches between the sliding surfaces 50, 60 (see the arrows particularly in FIG. 6).

Accordingly, when the rotating side seal ring 6 rotates, the lubricating oil in the equipment interior side space S2 is sequentially guided between the sliding surfaces 50, 60 by the spiral grooves 64, so that the portions exposed above the oil level of the lubricating oil between the sliding surfaces 50, 60 are prevented from being poorly lubricated. In other words, seizure between the sliding surfaces 50, 60 can be prevented.

Further, since the end 64A of the spiral grooves 64 is open on side of the tapered surface 63 of the rotating side seal ring 6, the lubricating oil can be likely to be guided between the sliding surfaces 50, 60.

Further, the spiral grooves 64 are formed over the entire surface of the inner peripheral surface 62 of the rotating side seal ring 6. In other words, the spiral grooves 64 extend over a long range in the axial direction, allowing a larger amount of lubricating oil to be supplied between the sliding surfaces 50, 60.

Further, the multiple spiral grooves 64 are equiangularly arranged on the inner peripheral surface 62 of the rotating side seal ring 6. This allows the lubricating oil to be supplied evenly in the circumferential direction between the sliding surfaces 50, 60.

Further, since the width dimension L2 of the land 62a is larger than the width dimension L1 of the spiral grooves 64, the lubricating oil can be prevented from moving from each of the spiral grooves 64 over the land 62a to the adjacent spiral groove 64, so that the lubricating oil can be reliably supplied between the sliding surfaces 50, 60.

Further, since the spiral grooves 64 each have a rectangular shape when viewed in cross section, the side wall surfaces defining each of the spiral grooves 64 prevent the lubricating oil from moving to the adjacent spiral grooves 64, so that the lubricating oil is likely to be retained within the spiral grooves 64.

Further, since the spiral grooves 64 are formed to extend inwardly in the inner peripheral surface 62 of the rotating side seal ring 6 by laser processing or the like, the rotating side seal ring 6 and the spiral grooves 64 can be easily configured as a single component.

### {Second embodiment}

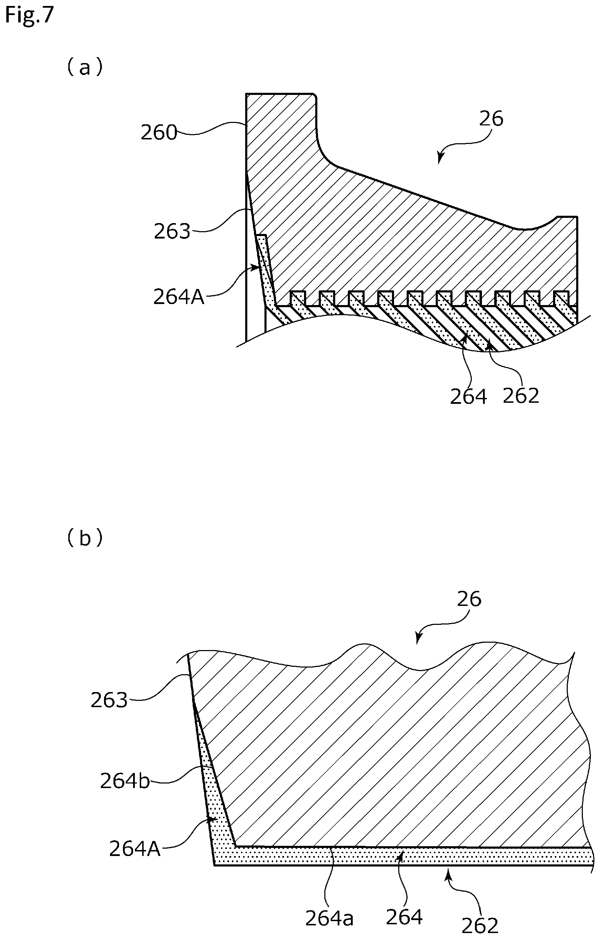

Next, a floating seal device according to a second embodiment of the present invention will be described with reference to FIG. 7. Redundant descriptions of the same configurations as those of the first embodiment will be omitted. FIG. 7B is a developed cross-sectional view taken along the spiral grooves.

As illustrated in FIGS. 7A and 7B, an end 264A of spiral grooves 264 of a rotating side seal ring 26 according to the second embodiment is extended and is open radially outward. In other words, the spiral grooves 264 are provided across an inner peripheral surface 262 and a tapered surface 263 of the rotating side seal ring 26.

Specifically, as illustrated in FIG. 7B, the spiral grooves 264 have a first bottom surface 264a and a second bottom surface 264b. The first bottom surface 264a extends substantially parallel to the inner peripheral surface 262 of the rotating side seal ring 26. The second bottom surface 264b is provided closer to the end 264A of the spiral grooves 264 than the first bottom surface 264a, and is inclined so as to increase in diameter toward a sliding surface 260.

Accordingly, the end 264A extends and is open radially outward from the inner peripheral surface 262 of the rotating side seal ring 26 along the tapered surface 263, and the lubricating oil is guided to the outer diameter side, so that the lubricating oil can be more reliably supplied to the sliding surface 260 by centrifugal force.

In addition, since the second bottom surface 264b on the side of the end 264A of the spiral grooves 264 is inclined so as to increase in diameter toward the sliding surface 260, the lubricating oil can be smoothly supplied to the sliding surface 260 on the outer diameter side by centrifugal force.

### {Third embodiment}

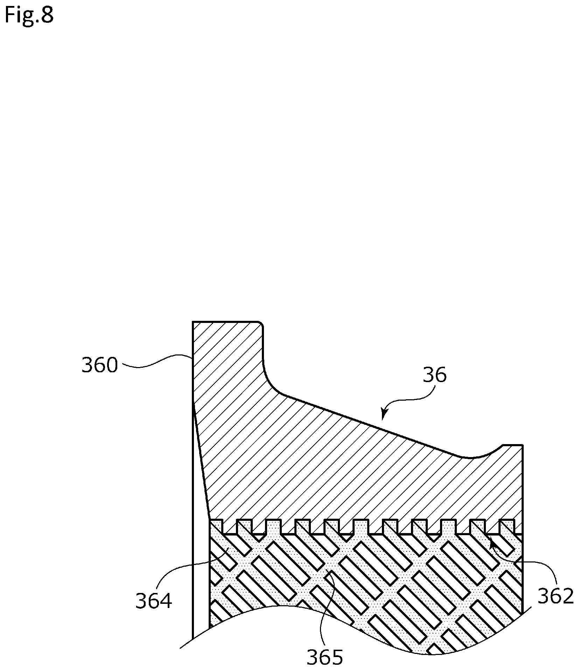

Next, a floating seal device according to a third embodiment of the present invention will be described with reference to FIG. 8. Redundant descriptions of the same configurations as those of the first embodiment will be omitted.

As illustrated in FIG. 8, an inner peripheral surface 362 of a rotating side seal ring 36 of the third embodiment is provided with a plurality of spiral grooves 364 and a plurality of reverse spiral grooves 365. The reverse spiral grooves 365 are grooves extending spirally so as to be wound opposite in direction to the spiral grooves 364.

Specifically, the reverse spiral grooves 365 extend spirally toward a sliding surface 360 in the axial direction while being wound clockwise when viewed in the axial direction from the right side of FIG. 8. The reverse spiral grooves 365 intersect in communicate with the spiral grooves 364 at multiple points.

The number of reverse spiral grooves 365 is smaller than that of the spiral grooves 364. For example, the number of reverse spiral grooves 365 is one-third that of the spiral grooves 364.

Accordingly, when the rotating side seal ring 36 rotates in the forward direction, the lubricating oil is supplied to the sliding surface 360 by the spiral grooves 364, and when the rotating side seal ring 36 rotates in the reverse direction, the lubricating oil is supplied to the sliding surface 360 by the reverse spiral grooves 365. In other words, the lubricating oil can be supplied to the sliding surface 360 regardless of the direction of rotation of the rotating side seal ring 36.

In addition, since the number of reverse spiral grooves 365 is smaller than that of spiral grooves 364, the reverse spiral grooves 365 are less likely to affect the lubricating oil supplied from the spiral grooves 364 when the rotating side seal ring 36 rotates in the forward direction.

Although the embodiments of the present invention have been described above with reference to the drawings, its specific configuration is not limited to these embodiments, and any changes and additions made without departing from the scope of the present invention are included in the present invention.

For example, in the first to third embodiments described above, an aspect in which the recessed portions are spiral grooves that are wound one or more times in the circumferential direction is illustrated, but the present invention is not limited thereto, and the recessed portions may be wound less than one time.

Further, in the first to third embodiments described above, an aspect in which the sliding surface side end of the recessed portions is open is illustrated, but the sliding surface side end of the recessed portions may be closed near a sliding surface side end surface of the rotating side seal ring.

Further, in the first to third embodiments described above, an aspect in which the end of the recessed portions on the side opposite the sliding surface is open on the side opposite the stationary side ring is illustrated, but the end may be closed.

Further, in the first to third embodiments described above, the recessed portions are inclined at approximately 45 degrees with respect to the axial direction, but the present invention is not limited thereto, and the angle of the recessed portions with respect to the axial direction may be freely changed.

Further, in the first to third embodiments described above, an aspect in which the groove width, winding pitch, and depth of the recessed portions are constant in the extension direction is illustrated, but they may be different in the extension direction. The groove width, winding pitch, depth, and the like of the recessed portions may be freely changed.

Further, in the first to third embodiments described above, an aspect in which the inner peripheral surface of the rotating side seal ring has a plurality of equiangularly arranged recessed portions is illustrated, but the present invention is not limited to the equiangular arrangement, and the distance between the spiral grooves can be freely changed. Additionally, the recessed portions may include at least one recessed portion and the number of recessed portions can be freely changed.

Further, in the first to third embodiments described above, the recessed portions are formed to extend inwardly in the inner peripheral surface of the rotating side seal ring by laser processing or the like, but a ring member having recessed portions may be fitted into the inner peripheral surface of the rotating side seal ring to form the recessed portions in the inner peripheral surface of the rotating side seal ring. Alternatively, the inner peripheral surface of the rotating side seal ring may be provided with a plurality of protruded portions protruding radially inward to form recessed portions between the adjacent protruded portions, or a ring member having a plurality of protruded portions and recessed portions between the adjacent protruded potions may be fitted into the inner peripheral surface of the rotating side seal ring to form recessed portions in the inner peripheral surface of the rotating side seal ring.

Further, in the first to third embodiments described above, an aspect in which the recessed portions each have a rectangular cross section is illustrated, but the present invention is not limited thereto and they may each have a curved cross section.

Further, for example, in the first to third embodiments described above, an aspect in which the floating seal device is used in side frames and track rollers that constitute crawlers is described, but the present invention is not limited thereto, and it may also be used in travel motors, idlers, axles, and the like, but not limited thereto.

Further, in the first to third embodiments described above, an aspect in which the stationary side housing is the stationary side housing 2 attached to the stationary side structure is described, but the present invention is not limited thereto, and the stationary side housing may be a part of the stationary side structure or the stationary side structure itself, but not limited thereto. Similarly, the rotating side housing is described as being the track roller which is the rotating side structure itself, but the present invention is not limited thereto, and the rotating side housing may be attached to the rotating side structure or may be a part of the rotating side structure, but not limited thereto.

Further, in the first to third embodiments described above, an aspect in which the fixed shaft and the rotating side housing rotate relative to the stationary side housing is illustrated, but the rotating side housing may be rotatably fixed to the fixed shaft that extends through the stationary side seal ring and the rotating side seal ring, so that the fixed shaft and the rotating side housing may rotate relative to each other.

Further, the stationary side seal ring and the rotating side seal ring may be integrated into a single component. In this case, the recessed portions are also arranged symmetrically about the sliding surface on the inner peripheral surface of the stationary side seal ring.

### {REFERENCE SIGNS LIST}

1 Floating seal device
2 Stationary side housing
3 Track roller (rotating side housing)
5 Stationary side seal ring
6 Rotating side seal ring
7 Stationary side O ring (stationary side elastic sealing member)
8 Rotating side O ring (rotating side elastic sealing member)
9 Rotating shaft
36 Rotating side seal ring
60 Sliding surface
62 Inner peripheral surface
62A Sliding surface side end
62a Land
63 Tapered surface (sliding surface side end surface)
64 Spiral groove (recessed portion)
64A End (outlet side end)
365 Reverse spiral groove
S1 Equipment exterior side space
S2 Equipment interior side space

## Claims

1. A floating seal device, comprising:
a stationary side housing;
a rotating side housing rotatable relative to the stationary side housing;
a stationary side seal ring arranged on an inner periphery side of the stationary side housing;
a rotating side seal ring arranged on the inner periphery side of the rotating side housing and sliding opposite the stationary side seal ring;
a stationary side elastic sealing member interposed between the stationary side housing and the stationary side seal ring; and
a rotating side elastic sealing member interposed between the rotating side housing and the rotating side seal ring,
wherein fluid is contained on the inner periphery sides of the stationary side seal ring and the rotating side seal ring, and
the rotating side seal ring has an inner peripheral surface provided with at least one recessed portion extending in an opposite direction to a direction of rotation of the rotating side seal ring toward a sliding surface side end.

2. The floating seal device according to claim 1, wherein the recessed portion is a spiral groove.

3. The floating seal device according to claim 2, wherein the spiral groove has a width narrower than a land adjacent to the spiral groove.

4. The floating seal device according to claim 1, wherein the recessed portion is open to the sliding surface side end of the inner peripheral surface of the rotating side seal ring.

5. The floating seal device according to claim 4, wherein the recessed portion is formed over the entire inner peripheral surface of the rotating side seal ring.

6. The floating seal device according to claim 4, wherein the recessed portion has a bottom surface which is at the sliding surface side end of the rotating side seal ring, and which is inclined toward an outer diameter side.

7. The floating seal device according to any one of claims 1 to 6, wherein
the rotating side seal ring has a sliding surface disposed radially outward of the inner peripheral surface of the rotating side seal ring and a tapered surface formed between the sliding surface and the inner peripheral surface, and
the recessed portion is provided across the inner peripheral surface and the tapered surface.

8. The floating seal device according to claim 1, wherein a plurality of the recessed portions are provided.

9. The floating seal device according to claim 1, wherein the rotating side seal ring has a reverse recessed portion extending opposite in direction to the recessed portion extending in one circumferential direction.
